# EUROPÄISCHE PATENTSCHRIFT

(11) **EP 3 677 520 B1**
(45) Veröffentlichungstag und Bekanntmachung des Hinweises auf die Patenterteilung: **05.01.2022**
(21) Anmeldenummer: 19208224.6
(22) Anmeldetag: 11.11.2019
(51) Int. Cl.: B65B 9/20, B29C 65/00, B29C 65/02

(54) **VORRICHTUNG ZUR HERSTELLUNG VON SCHLAUCHBEUTELN MIT MEHRKANTSIEGELUNG**
DEVICE FOR PRODUCING TUBULAR BAGS WITH MULTI-EDGE SEALING
DISPOSITIF DE FABRICATION DE SACS TUBULAIRES POURVUS DE SCELLAGE À PLUSIEURS BORDS

(30) Priorität: 26.11.2018 DE 102018129676
(43) Veröffentlichungstag der Anmeldung: 08.07.2020
(73) Patentinhaber: Hastamat Verpackungstechnik GmbH + Co. KG., 95633 Lahnau (DE)
(72) Erfinder: ESSEN, Ivan, 35510 Butzbach (DE); PIEPENBROCK, Olaf, 49076 Osnabrück (DE)
(74) Vertreter: advotec.

(56) Entgegenhaltungen:
- EP-A1- 1 609 720
- DE-A1- 2 337 216
- JP-A- H10 245 002
- JP-A- 2004 352 306
- JP-A- 2005 119 185

## Beschreibung

Die vorliegende Erfindung betrifft eine Vorrichtung zur Herstellung von Schlauchbeuteln mit Mehrkantsiegelung mit einer Formschulter zum Umformen einer ebenen Folienbahn zu einer Hüllbahn, einem von der Hüllbahn umgebenen Formatrohr und einer das Formatrohr umgebenden Längsnahtbildungseinrichtung mit einer Folienführungseinrichtung zur Ausbildung von in Transportrichtung der Folienbahn verlaufenden Folienüberlappungsbereichen und einer Heißsiegeleinrichtung zur Ausbildung von Längssiegelnähten in den Folienüberlappungsbereichen, wobei das Formatrohr benachbart einem Formschulterauslauf zur Ausbildung der Folienüberlappungsbereiche eine in der Anzahl der Anzahl der Längssiegelnähte entsprechende Anzahl von Finnen aufweist.

Eine Vorrichtung der eingangs genannten Art, die die Herstellung von Schlauchbeuteln ermöglicht, ist aus der EP 0 627 355 B1 bekannt. Weitere Vorrichtungen zur Herstellung von Schlauchbeuteln mit Mehrkantsiegelung sind Gegenstand der JP H10 245002, der DE 23 37 216, der EP 1 609 720, der JP 2004 352306 und der JP 2005119185. Die

Herstellung der Längssiegelnähte mittels der bekannten Vorrichtung setzt voraus, dass aus der bis zum Einlauf in die Formschulter noch ebenen Folienbahn nach Umformung zu einem das Formatrohr einhüllenden Hüllschlauch durch Herstellung einer ersten Längssiegelnaht bereits ein Folienschlauch gebildet ist, um dann anschließend mittels der am Formatrohr ausgebildeten Finnen in Kombination mit einer jeweils jeder Finne zugeordneten Siegelwerkzeugpaarung, die zwei gegeneinander wirkende Siegelbacken aufweist, weitere Längssiegelnähte zur Ausbildung der Mehrkantsiegelung herzustellen.

Ausgehend von dem vorgenannten Stand der Technik ist es Aufgabe der Erfindung, eine Vorrichtung vorzuschlagen, die die Herstellung von Schlauchbeuteln mit Mehrkantsiegelung ermöglicht, die eine gleichzeitige Herstellung sämtlicher am Schlauchbeutel ausgebildeter Längssiegelnähte ermöglicht.

Zur Lösung dieser Aufgabe weist die erfindungsgemäße Vorrichtung die Merkmale des Anspruchs 1 auf.

Bei der erfindungsgemäßen Vorrichtung weist die Folienführungseinrichtung jeweils den Finnen zugeordnete erste und zweite Folienleiteinrichtungen auf, derart, dass jeweils eine Finne zur Ausbildung eines Doppelführungsspaltes zwischen einer ersten und einer zweiten Folienleiteinrichtung angeordnet ist, wobei die erste und die zweite Folienleiteinrichtung unabhängig voneinander in ihrer Relativanordnung zur Finne einstellbar sind.

Im Gegensatz zu der bekannten Vorrichtung ermöglicht die erfindungsgemäße Vorrichtung aufgrund der durch die Relativanordnung der ersten und zweiten Folienleiteinrichtungen gegenüber den Finnen erfolgenden Ausbildung des Doppelführungsspalt die Herstellung von Überlappungsbereichen, ohne dass hierzu die vorhergehende Ausbildung eines Folienschlauchs mit geschlossenem Folienbahnquerschnitt erforderlich wäre. Weiterhin ist es ebenso wenig erforderlich, zur Ausbildung der Überlappungsbereiche Siegelwerkzeuge der Heißsiegeleinrichtung in einer definierten Relativanordnung zu den Finnen vorzusehen. Vielmehr ermöglicht die erfindungsgemäße Ausgestaltung der Vorrichtung eine Herstellung der Überlappungsbereiche an der noch einen offenen Folienbahnquerschnitt aufweisenden Hüllbahn, da durch den Doppelführungsspalt, der durch die Relativanordnung der Finnen gegenüber den ersten und zweiten Folienleiteinrichtungen gebildet ist, die Ausbildung der Überlappungsbereiche an der Folienbahn unabhängig von der Ausbildung einer ersten Längssiegelnaht ist, die durch Verbindung der Folienbahnränder erst die Ausbildung eines Folienschlauchs ermöglicht.

Vorzugsweise kann vielmehr bei einem Einsatz der erfindungsgemäßen Vorrichtung die Ausbildung der die Folienbahnränder miteinander verbinden Längssiegelnaht, die aus der Hüllbahn den Folienschlauch erzeugt, gleichzeitig mit den weiteren Längssiegelnähten zur Ausbildung der Mehrkantsiegelung erfolgen.

Darüber hinaus ermöglicht die erfindungsgemäße Vorrichtung aufgrund der unabhängig voneinander in ihrer Relativanordnung gegenüber den Finnen verstellbaren ersten und zweiten Folienleiteinrichtungen eine leichte Anpassung der Folienführungseinrichtung an die jeweilige, zur Herstellung der Schlauchbeutel verwendete Folienbahn, wobei durch eine geeignete Einstellung der Spaltweiten des Doppelführungsspaltes in besonderer Weise die Flexibilität und die Folienstärke berücksichtigt werden kann.

Die Einstellbarkeit der Folienführungseinrichtung ermöglicht es insbesondere, Justierungen der Folienführungseinrichtung in situ vorzunehmen, also ohne das Formatrohr und die Folienführungseinrichtung zuvor aus einer Anlage zur Herstellung von Schlauchbeuteln demontieren zu müssen. Insbesondere ist keine Nachbearbeitung der Folienführungseinrichtung, etwa durch einen Materialabtrag an Komponenten der Folienführungseinrichtung, also etwa den ersten und zweiten Folienleiteinrichtungen, zur Beeinflussung der zur Ausbildung der Überlappungsbereiche notwendigen Spaltmaße erforderlich.

Besonders vorteilhaft ist es, wenn die ersten Folienleiteinrichtungen an einem Formatrohrträger angeordnet sind, wobei die ersten Folienleiteinrichtungen vorzugsweise an einem zumindest in einer Achsenrichtung am Formatrohrträger verstellbar angeordneten Ausleger angeordnet sind, sodass der Formatrohrträger, der zur Installation des Formatrohrs dient, gleichzeitig zur Montage der ersten Folienleiteinrichtungen verwendbar ist.

Wenn die ersten Folienleiteinrichtungen in zumindest einer Achsenrichtung am Ausleger verstellbar angeordnet sind, kann ein erster Einstellungsmechanismus am Ausleger ausgebildet sein, sodass in einer besonders einfachen Ausführungsform der Vorrichtung der standardmäßig eingesetzte Formatrohrträger unverändert auch bei einer Kombination mit der erfindungsgemäßen Vorrichtung verwendbar ist.

Besonders vorteilhaft ist es, wenn die zweiten Folienleiteinrichtungen an der mit dem Formatrohrträger verbundenen Längsnahtbildungseinrichtung angeordnet sind, wobei die zweiten Folienleiteinrichtungen jeweils an einer Siegelleiste der Längsnahtbildungseinrichtung angeordnet sind, so dass auch zur Installation der zweiten Folienleiteinrichtungen eine ohnehin zur Ausbildung der Längsnahtbildungseinrichtung benötigte Komponente, die im Zusammenwirken mit einer Heißsiegeleinrichtung die Herstellung der Längsnähte ermöglicht, verwendet werden kann.

Wenn zur Verstellung der zweiten Folienleiteinrichtungen die Siegelleisten der Längsnahtbildungseinrichtung verstellbar an der Längsnahtbildungseinrichtung angeordnet sind, ist auf einfache Art und Weise eine zweite Einstellachse zur besonders genauen Positionierung der zweiten Folienleiteinrichtungen definiert.

Vorzugsweise sind zur Verstellung der Siegelleisten jeweils zwei Siegelleisten in ihrer Relativanordnung einstellbar an einem Siegelleistenträger angeordnet, wobei der Siegelleistenträger an der Längsnahtbildungseinrichtung verstellbar angeordnet ist.

Wenn die Siegelleisten auf einer ersten Achse in einer zur Transportrichtung der Folienbahn senkrechten Stellebene und der Siegelleistenträger auf einer zweiten zur ersten Achse senkrechten Achse verstellbar angeordnet sind, ist ebenfalls eine besonders exakte Positionierung der zweiten Folienleiteinrichtungen möglich.

Nachfolgend wird eine bevorzugte Ausführungsform der Erfindung anhand der Zeichnung näher erläutert.

Es zeigen:
- Fig. 1: eine isometrische Darstellung einer Vorrichtung zur Herstellung von Schlauchbeuteln mit Mehrkantsiegelung in isometrischer Darstellung;
- Fig. 2: die in Fig. 1 gezeigte Vorrichtung in Frontansicht;
- Fig. 3: eine Schnittdarstellung der in Fig. 2 gezeigten Vorrichtung längs Schnittlinienverlauf III - III in Fig. 2;
- Fig. 4: eine vergrößerte Teilansicht der in Fig. 1 dargestellten Vorrichtung zur Darstellung eines zwischen einer Formschulter und einem Formatrohr gebildeten Übergangsbereichs;
- Fig. 5: eine vergrößerte Teilansicht einer Führungsanordnung einer Folienführungseinrichtung.

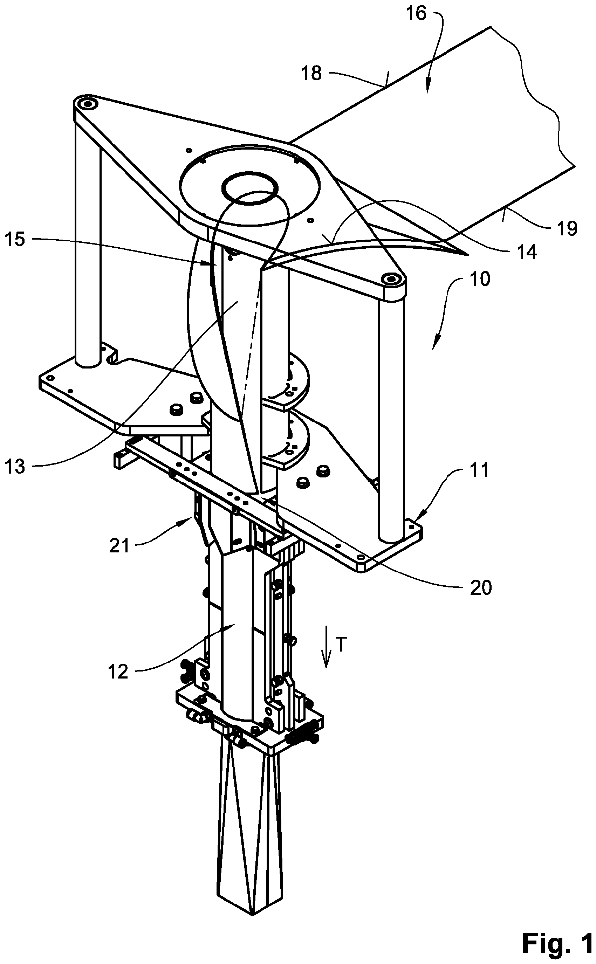

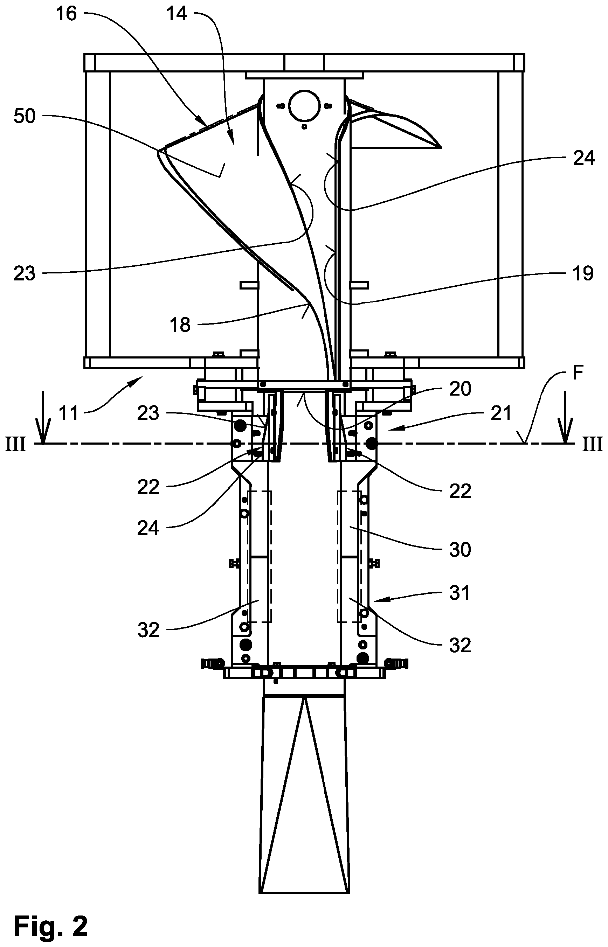

Die in den **Fig. 1** und **2** dargestellte Vorrichtung 10 umfasst ein an einem Formatrohrträger 11 angeordnetes Formatrohr 12, das an einem oberen Formschulterabschnitt 13 von einer Formschulter 14 derart umgeben ist, dass zwischen dem Formschulterabschnitt 13 und der Formschulter 14 ein Ringspalt 15 ausgebildet ist, in den eine in **Fig. 1** lediglich angedeutete, auf die Formschulter 14 zugeführte Folienbahn 16 in Kontakt mit einer Formschulteroberfläche 50 derart eingeführt wird, dass Folienränder 18, 19 an konvergierend zueinander angeordneten Führungsrändern 23, 24 der Formschulter 14 aufeinander zubewegt werden und in benachbarter Relativanordnung unterhalb eines am Ende der Führungsränder 18, 19 gebildeten Formschulterauslaufs 20 zu einer Folienführungseinrichtung 21 gelangen, deren Funktion im Nachfolgenden näher erläutert wird.

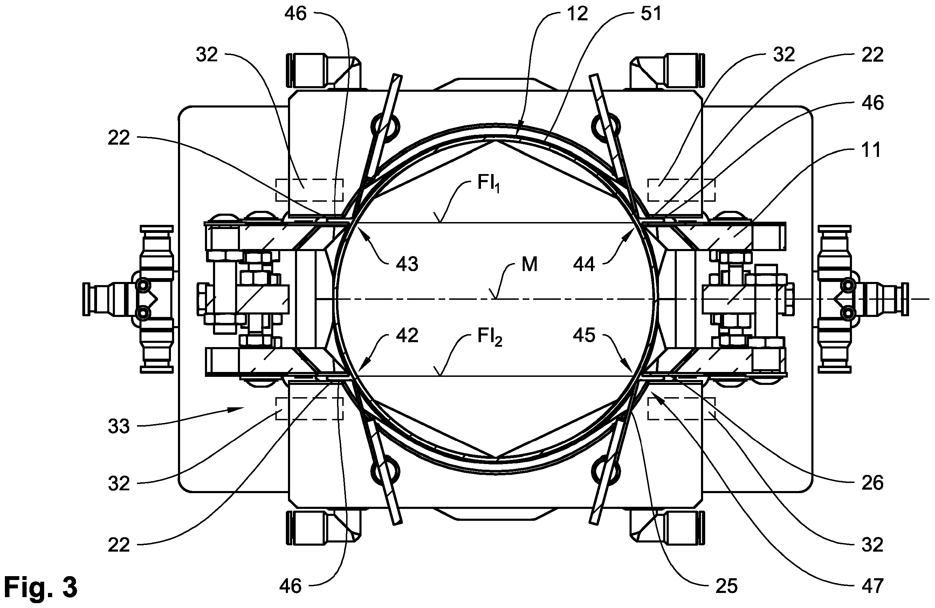

Wie **Fig. 2** zeigt, befindet sich die Folienführungseinrichtung 21 in einer gemeinsamen Folienführungsebene F mit Finnen 22, die im vorliegenden Fall derart am Formatrohr 12 ausgebildet sind, dass, wie insbesondere **Fig. 3** zeigt, jeweils zwei einander gegenüberliegend am Umfang des Formatrohrs 12 angeordnete Finnen 22 sich in einer gemeinsamen Finnenebene FI₁ und FI₂ befinden, wobei im vorliegenden Fall die beiden Finnenebenen FI₁ und FI₂ parallel zueinander angeordnet sind und sich jeweils mit übereinstimmendem Abstand auf einander gegenüberliegenden Seiten einer Mittelachse M des Formatrohrs 12 befinden.

Wie **Fig. 2** zeigt, sind die Finnen 22 jeweils in Transportrichtung T (Fig. 1) der Folienbahn mit einem ansteigenden Führungsrand 23 ausgebildet, der im weiteren Verlauf der Finnen 22 in Transportrichtung T in einen parallel zur Oberfläche des Formatrohrs 12 ausgebildeten Führungsrand 24 übergeht.

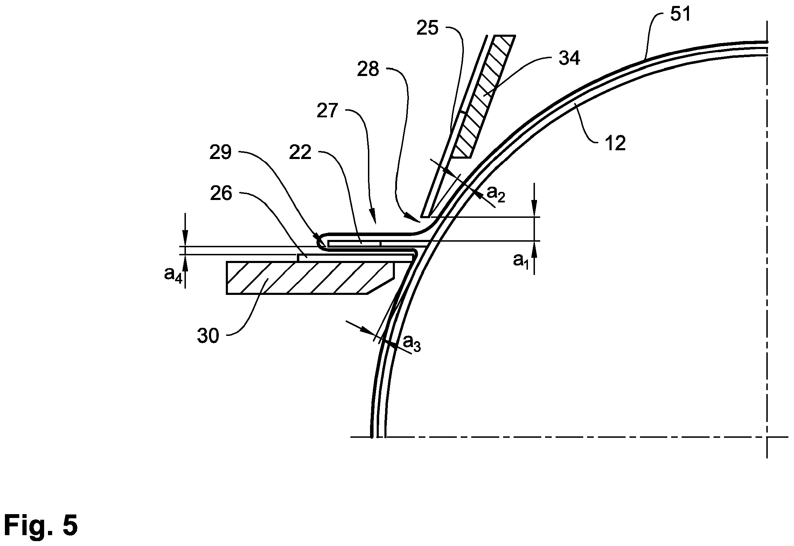

Wie **Fig. 5** zeigt, erstrecken sich zu beiden Seiten der Finnen 22 und längs diesen jeweils eine erste Folienleiteinrichtung 25 und eine zweite Folienleiteinrichtung 26, derart, dass aufgrund der Relativanordnung der ersten und zweiten Folienleiteinrichtung 25, 26 mit der zwischenliegend angeordneten Finne 22 ein Doppelführungsspalt 27 ausgebildet ist mit einem ersten Führungsspalt 28, der zwischen der ersten Folienleiteinrichtung 25 und der Finne 22 ausgebildet ist, und einem zweiten Führungsspalt 29, der zwischen der Finne 22 und der zweiten Folienleiteinrichtung 26 ausgebildet ist.

Im Fall des dargestellten Ausführungsbeispiels befinden sich die ersten Folienleiteinrichtungen 25 am Formatrohrträger 11 (**Fig. 2**), und die zweiten Folienleiteinrichtungen 26 sind jeweils an einer Siegelleiste 30 einer Längsnahtbildungseinrichtung 31 angeordnet, die jeweils in Kombination mit einer Siegelbacke 32 (**Fig. 3**) einer Heißsiegeleinrichtung 33 zur Ausbildung von Längssiegelnähten dienen.

Zum Zwecke einer möglichst übersichtlichen Darstellung sind in den **Fig. 2** **und** **3** die Siegelbacken 32 der Heißsiegeleinrichtung 33 lediglich schematisch dargestellt, wobei jeweils eine Siegelbacke 32 gegenüberliegend einer Siegelleiste 30 der Längsnahtbildungseinrichtung 31 angeordnet ist.

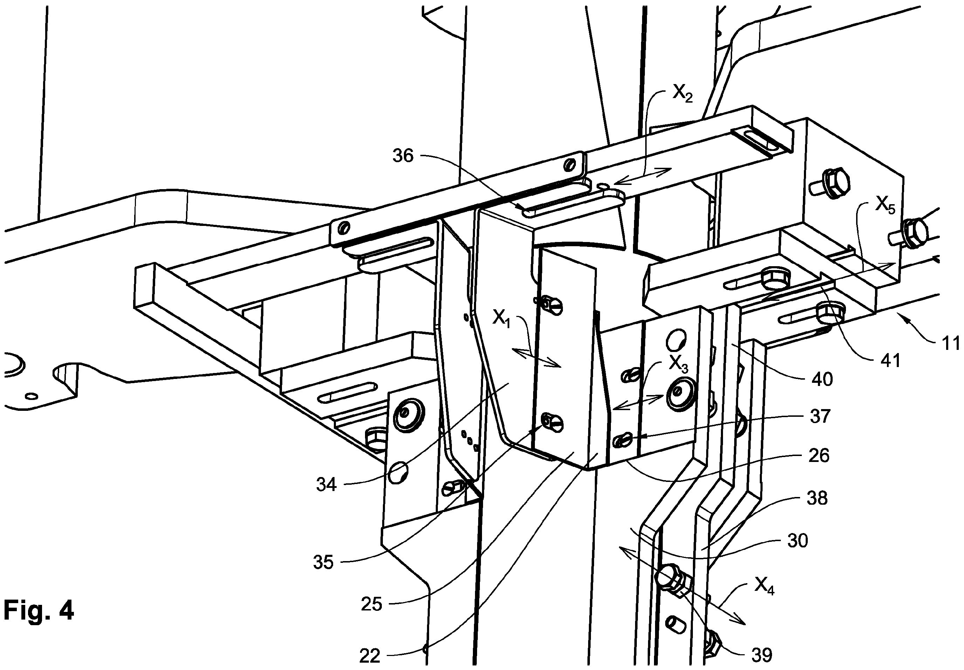

Wie insbesondere anhand einer Zusammenschau der **Fig. 3** **und** **4** deutlich wird, können die ersten Folienleiteinrichtungen 25 und die zweiten Folienleiteinrichtungen 26 unabhängig voneinander in ihrer Relativanordnung gegenüber der jeweils zwischen einer ersten Folienleiteinrichtung 25 und einer zweiten Folienleiteinrichtung 26 angeordneten Finne 22 verändert und in der veränderten Relativanordnung fixiert werden. Hierzu sind die ersten Folienleiteinrichtungen 25 jeweils an einem Ausleger 34 über eine hier als Langlochverschraubung ausgebildete Stelleinrichtung 35 in einer ersten Achsenrichtung X₁ verstellbar. Darüber hinaus sind die Ausleger 34 in ihrer Relativanordnung gegenüber dem Formatrohrträger 11, der aus Gründen der Übersichtlichkeit in **Fig. 4** nur unvollständig dargestellt ist, in einer zweiten Achsenrichtung X₂ ebenfalls verstellbar, wobei hierzu eine Stelleinrichtung 36 verwendet wird, die ebenfalls als eine Langlochverschraubung ausgebildet ist.

Wie insbesondere anhand von **Fig. 4** nachvollziehbar ist, ermöglicht eine Betätigung der Stelleinrichtung 35 eine Veränderung der Relativposition der ersten Folienleiteinrichtung 25 zur Einstellung des Abstands a₁ gegenüber der Finne 22 (**Fig. 5**), wobei eine Betätigung der Stelleinrichtung 36 eine Änderung des Abstands a₂ zwischen der ersten Folienleiteinrichtung 25 und dem Formatrohr 12 ermöglicht.

Die zweiten Folienleiteinrichtungen 26, welche jeweils an einer Siegelleiste 30 der Längsnahtbildungseinrichtung 31 angeordnet sind, können zum einen über eine Stelleinrichtung 37, die im vorliegenden Fall ebenfalls als Langlochverschraubung ausgebildet ist, längs einer Achsenrichtung X₃ in ihrer Position gegenüber der Siegelleiste 30 verändert werden, sodass sich hierüber der Abstand a₃ der zweiten Folienleiteinrichtung 26 gegenüber dem Formatrohr 12 beeinflussen lässt. Zur Änderung des Abstandes a₄ der Folienleiteinrichtung 26 gegenüber der Finne 22 können die Siegelleisten 30 längs einer Achsenrichtung X₄ (**Fig. 4**) jeweils in ihrem Abstand gegenüber einem Siegelleistenträger 38 verändert werden. Hierzu ist jeweils zwischen einer Siegelleiste 30 und einem Siegelleistenträger 38 eine Stelleinrichtung 39 vorgesehen, die im vorliegenden Fall aus einer Bolzenverschraubung gebildet ist, deren Länge zwischen der Siegelleiste 30 und dem Siegelleistenträger 38 veränderbar ist.

Darüber hinaus ermöglicht die Kopplung von jeweils zwei benachbarten Siegelleisten 30 mittels eines gemeinsamen Siegelleistenträgers 38 eine gemeinsame Verstellung der zweiten Folienleiteinrichtungen 26 längs der Achsenrichtung X₅ durch eine entsprechende Änderung der Relativanordnung der axialen Siegelleistenträgerenden 40 in einer am Formrohrträger 11 ausgebildeten Längsführung 41.

Wie aus **Fig. 3** deutlich wird, die einen Querschnitt durch die Folienführungseinrichtung zeigt, ermöglicht die Folienführungseinrichtung 21 im Zusammenwirken mit den am Umfang des Formatrohrs 12 ausgebildeten Finnen 22, dass in einer aus dem Formschulterauslauf 20 austretenden Hüllbahn 51, die bei Austritt aus dem Formschulterauslauf 20 und Eintritt in die Folienführungseinrichtung 21 noch nicht zu einem Folienschlauch mit geschlossenem Querschnitt ausgebildet ist und noch keine Längsnaht als Voraussetzung zur Ausbildung des Folienschlauchs aufweist, bei Eintritt der Hüllbahn 21 in die Folienführungseinrichtung 21 im Bereich von drei Führungsanordnungen 42, 43, 44 der insgesamt vier jeweils eine erste Folienleiteinrichtung 25 und eine zweite Folienleiteinrichtung 26 aufweisenden Führungsanordnungen 42 bis 45 kontinuierliche Folienüberlappungsbereiche 46 ausgebildet werden, wobei in der unterhalb der Führungsränder 18, 19 am Formschulterauslauf 20 angeordneten Führungsanordnung 45 eine Folienüberlappungsbereich 47 ausgebildet wird, in dem die Folienränder 18, 19 parallel einander gegenüberliegen und noch nicht miteinander verbunden sind.

Wie **Fig. 2** zeigt, befindet sich die Heißsiegeleinrichtung 32 mit den jeweils einer Siegelleiste 30 gegenüberliegenden Siegelbacken 33 in Transportrichtung der Folienbahn unterhalb der Folienführungseinrichtung 21, sodass die Ausbildung von insgesamt vier Längssiegelnähten in den Folienüberlappungsbereichen 46, 47 erst nach Austritt der Hüllbahn 51 aus der Folienführungseinrichtung 21 erfolgt, wobei auch die Längssiegelnaht zur Verbindung der im Folienüberlappungsbereich 47 einander gegenüberliegenden Folienränder 18, 19, die erst die Ausbildung eines Folienschlauchs ermöglicht, gleichzeitig mit Ausbildung der weiteren drei Längssiegelnähte in den Folienüberlappungsbereichen 46 zur Herstellung der Mehrkantsiegelung erfolgt.

## Patentansprüche

1. Vorrichtung zur Herstellung von Schlauchbeuteln mit Mehrkantsiegelung mit einer Formschulter (14) zum Umformen einer ebenen Folienbahn (16) zu einer Hüllbahn (51), einem von der Hüllbahn (51) umgebenen Formatrohr (12) und einer das Formatrohr umgebenden Längsnahtbildungseinrichtung (31) mit einer Folienführungseinrichtung (21) zur Ausbildung von in Transportrichtung der Folienbahn verlaufenden Folienüberlappungsbereichen (46, 47) und einer Heißsiegeleinrichtung (33) zur Ausbildung von Längssiegelnähten in den Folienüberlappungsbereichen (46, 47), wobei das Formatrohr (12) benachbart einem Formschulterauslauf (20) zur Ausbildung der Folienüberlappungsbereiche (46, 47) eine der Anzahl der Längssiegelnähte entsprechende Anzahl von Finnen (22) aufweist und die Folienführungseinrichtung (21) jeweils den Finnen (22) zugeordnete erste und zweite Folienleiteinrichtungen (25, 26) aufweist, derart, dass jeweils eine Finne (22) zur Ausbildung eines Doppelführungsspaltes (27) zwischen einer ersten und einer zweiten Folienleiteinrichtung (25, 26) angeordnet ist, **gekennzeichnet dadurch, dass** die erste und die zweite Folienleiteinrichtung (25, 26) unabhängig voneinander in ihrer Relativanordnung zur Finne (22) einstellbar sind.

2. Vorrichtung nach Anspruch 1,
**dadurch gekennzeichnet,**
**dass** die ersten Folienleiteinrichtungen (25) an einem Formatrohrträger (11) angeordnet sind, wobei die ersten Folienleiteinrichtungen (25) an einem zumindest in eine Achsenrichtung am Formschulterträger (11) verstellbar angeordneten Ausleger (34) angeordnet sind.

3. Vorrichtung nach Anspruch 2,
**dadurch gekennzeichnet,**
**dass** die ersten Folienleiteinrichtungen (25) in zumindest einer Achsenrichtung am Ausleger (34) verstellbar angeordnet sind.

4. Vorrichtung nach einem der vorangehenden Ansprüche,
**dadurch gekennzeichnet,**
**dass** die zweiten Folienleiteinrichtungen (26) an der mit dem Formatrohrträger (11) verbundenen Längsnahtbildungseinrichtung (31) angeordnet sind, wobei die zweiten Folienleiteinrichtungen (26) jeweils an einer Siegelleiste (30) der Längsnahtbildungseinrichtung (31) angeordnet sind.

5. Vorrichtung nach Anspruch 4,
**dadurch gekennzeichnet,**
**dass** zur Verstellung der zweiten Folienleiteinrichtungen (26) die Siegelleisten (30) der Längsnahtbildungseinrichtung (31) verstellbar an der Längsnahtbildungseinrichtung (31) angeordnet sind.

6. Vorrichtung nach Anspruch 5,
**dadurch gekennzeichnet,**
**dass** zur Verstellung der Siegelleisten (30) jeweils zwei Siegelleisten (30) in ihrer Relativanordnung einstellbar an einem Siegelleistenträger (38) angeordnet sind, wobei der Siegelleistenträger (38) an der Längsnahtbildungseinrichtung (31) verstellbar angeordnet ist.

7. Vorrichtung nach Anspruch 6,
**dadurch gekennzeichnet,**
**dass** die Siegelleisten (30) auf einer ersten Achse in einer zur Transportrichtung der Folienbahn (16) senkrechten Stellebene und der Siegelleistenträger (38) auf einer zweiten zur ersten Achse senkrechten Achse verstellbar angeordnet sind.

## Claims

1. A device for producing tubular bags sealed on multiple sides, the device comprising a forming shoulder (14) for deforming a plane film web (16) into an envelope web (51), a forming tube (12) which is surrounded by the envelope web (51), and a longitudinal seal former (31) which surrounds the forming tube and which has a film guide (21) for forming film overlap areas (46, 47) extending in the transport direction of the film web and which comprises a heat sealer (33) for forming longitudinal sealed seams in the film overlap areas (46, 47), the forming tube (12) having, adjacent to a forming shoulder outlet (20), a number of fins (22) for forming the film overlap areas (46, 47), the number of fins corresponding to the number of longitudinal sealed seams, and the film guide (21) having first and second film guide elements (25, 26), a first and a second film guide element being associated with each fin (22), each fin (22) being disposed between a first and a second film guide element (25, 26) in such a manner that a double guide gap (27) is formed, **characterized in that** the first and second film guide elements (25, 26) are adjustable independently of each other in terms of their position relative to the fin (22).

2. The device according to claim 1,
**characterized in that**
the first film guide elements (25) are disposed on a forming tube support (11), the first film guide elements (25) being disposed on a bracket (34) which is disposed displaceable in at least one axial direction on the forming tube support (11).

3. The device according to claim 2,
**characterized in that**
the first film guide elements (25) are disposed displaceable in at least one axial direction on the bracket (34).

4. The device according to any one of the preceding claims, **characterized in that**
the second film guide elements (26) are disposed on the longitudinal seal former (31), which is connected to the forming tube support (11), the second film guide elements (26) each being disposed on a sealing ridge (30) of the longitudinal seal former (31).

5. The device according to claim 4,
**characterized in that**
in order for the second film guide elements (26) to be displaceable, the sealing ridges (30) of the longitudinal seal former (31) are disposed displaceable on the longitudinal seal former (31).

6. The device according to claim 5,
**characterized in that**
in order for the sealing ridges (30) to be displaceable, two sealing ridges (30) are disposed adjustable in terms of their relative position on each sealing ridge support (38), the sealing ridge support (38) being disposed displaceable on the longitudinal seal former (31).

7. The device according to claim 6,
**characterized in that**
the sealing ridges (30) are disposed displaceable on a first axis in a positioning plane perpendicular to the transport direction of the film web (16) and the sealing ridge support (38) is disposed displaceable on a second axis perpendicular to the first axis.

## Revendications

1. Dispositif pour produire des sachets tubulaires scellés sur plusieurs côtés, le dispositif comprenant un épaulement de formage (14) pour former une bande continue (16) de film plate en une bande continue (51) d'enveloppe, un tube (12) de mise en forme entouré par la bande continue (51) d'enveloppe et un moyen (31) de formation de joints longitudinaux qui entoure le tube de mise en forme et qui a un moyen de guidage (21) de film pour former des zones de chevauchement (46, 47) du film qui s'étendent dans la direction de transport de la bande continue de film et qui comprend un moyen de thermoscellement (33) pour former des joints scellés longitudinaux dans les zones de chevauchement (46, 47) du film, le tube (12) de mise en forme ayant, adjacent à une sortie (20) de l'épaulement de formage, un nombre d'ailettes (22) pour former les zones de chevauchement (46, 47) du film, le nombre desdites ailettes (22) correspondant au nombre des joints scellés longitudinaux, et le moyen de guidage (21) de film ayant des premiers et deuxièmes éléments de guidage (25, 26) de film, un premier et un deuxième élément de guidage de film étant attribués à chaque ailette (22), chaque ailette (22) étant disposée entre un premier et un deuxième élément de guidage (25, 26) de film de manière qu'une fente de guidage (27) double est formée, **caractérisé en ce que** le premier et le deuxième élément de guidage (25, 26) de film sont ajustables indépendamment l'un de l'autre en ce qui concerne leur disposition relative par rapport à l'ailette (22).

2. Dispositif selon la revendication 1,
**caractérisé en ce que**
les premiers éléments de guidage (25) sont disposés sur un support (11) du tube de mise en forme, les premiers éléments de guidage (25) étant disposés sur une console (34) disposée de manière déplaçable dans au moins une direction axiale sur le support (11) du tube de mise en forme.

3. Dispositif selon la revendication 2,
**caractérisé en ce que**
les premiers éléments de guidage (25) sont disposés de manière déplaçable dans au moins une direction axiale sur la console (34).

4. Dispositif selon l'une quelconque des revendications précédentes, **caractérisé en ce que**
les deuxièmes éléments de guidage (26) sont disposés sur le moyen (31) de formation de joints longitudinaux relié au support (11) du tube de mise en forme, les deuxièmes éléments de guidage (26) étant chacun disposé sur une barre de scellage (30) du moyen (31) de formation de joints longitudinaux.

5. Dispositif selon la revendication 4,
**caractérisé en ce que**
pour que les deuxièmes éléments de guidage (26) soient déplaçables, les barres de scellage (30) du moyen (31) de formation de joints longitudinaux sont disposées de manière déplaçable sur le moyen (31) de formation de joints longitudinaux.

6. Dispositif selon la revendication 5,
**caractérisé en ce que**
pour que les barres de scellage (30) soient déplaçables, deux barres de scellage (30) sont disposées de manière ajustable en ce qui concerne leur disposition relative sur chaque support (38) des barres de scellage, le support (38) des barres de scellage étant disposé de manière déplaçable sur le moyen (31) de formation de joints longitudinaux.

7. Dispositif selon la revendication 6,
**caractérisé en ce que**
les barres de scellage (30) sont disposées de manière déplaçable sur un premier axe dans un plan de positionnement perpendiculaire à la direction de transport de la bande continue (16) de film et le support (38) des barres de scellage est disposé de manière déplaçable sur un deuxième axe perpendiculaire au premier axe.
